# EUROPEAN PATENT APPLICATION

(11) **EP 1 434 413 A1**
(43) Date of publication of application: **30.06.2004**
(21) Application number: 03027865.9
(22) Date of filing: 04.12.2003
(51) Int. Cl.: H04M 1/60, H04M 1/05, H04L 12/56

(54) **Wireless apparatus for audio acquisition**

(30) Priority: 26.12.2002 JP 2002377169
(71) Applicant: Kabushiki Kaisha Toshiba, Tokyo 105-8001 (JP)
(72) Inventor: Yamashita, Makoto, Minato-ku, 1-1 Shibaura 1-chome Tokyo 105-8001 (JP)
(74) Representative: Henkel, Feiler & Hänzel

(57) **Abstract**

This invention relates to a wireless sound apparatus characterized by comprising a unit (37A,B) which determines one of a plurality of wireless connection destinations, and a unit (34) which outputs audio information transmitted from the selected wireless connection destination.

## Description

The present invention relates to a wireless sound apparatus and an audio acquisition method in the wireless sound apparatus.

When a wireless sound apparatus such as a wireless headset is to be connected to one of connection destinations, a connection destination must be specified.

The sound apparatus such as a wireless headset does not have any user interface such as a display, unlike an information processing apparatus. It is, therefore, difficult to select one of connection destinations.

As a method of selecting one of connection destinations in a sound apparatus having no user interface, a technique of obtaining information representing a connection destination from the connection destination in advance, saving the information, and in wireless connection, connecting the connection destination by using the saved information representing the connection destination (U.S. published application No. US 2002/0111140).

In this technique, connection is done using information which is saved in advance and represents a connection destination. Even if the user of the sound apparatus wants to connect to another connection destination, he/she cannot connect the wireless sound apparatus to this connection destination unless information representing the new connection destination is sent from a host device.

According to an embodiment of the present invention, there is provided a wireless sound apparatus characterized by comprising means for determining one of a plurality of wireless connection destinations, and means for outputting audio information transmitted from the selected wireless connection destination.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing a wireless headset and a personal computer serving as a connection destination according to an embodiment of the present invention;
FIG. 2 is a block diagram showing the circuit arrangement of the wireless headset;
FIG. 3 is a block diagram showing the circuit arrangement of the personal computer (PC) having a Bluetooth communication function;
FIG. 4 is a flow chart showing processing on the wireless headset side when the wireless headset is connected to the PC according to the first embodiment of the present invention;
FIG. 5 is a flow chart showing processing contents in the PC when the wireless headset is connected to the PC;
FIG. 6 is a flow chart for explaining the operation of a wireless headset according to the second embodiment of the present invention; and
FIG. 7 is a flow chart showing processing on the wireless headset side when the wireless headset is connected to the PC.

A wireless headset according to preferred embodiments of the present invention will be described below with reference to the several views of the accompanying drawing.

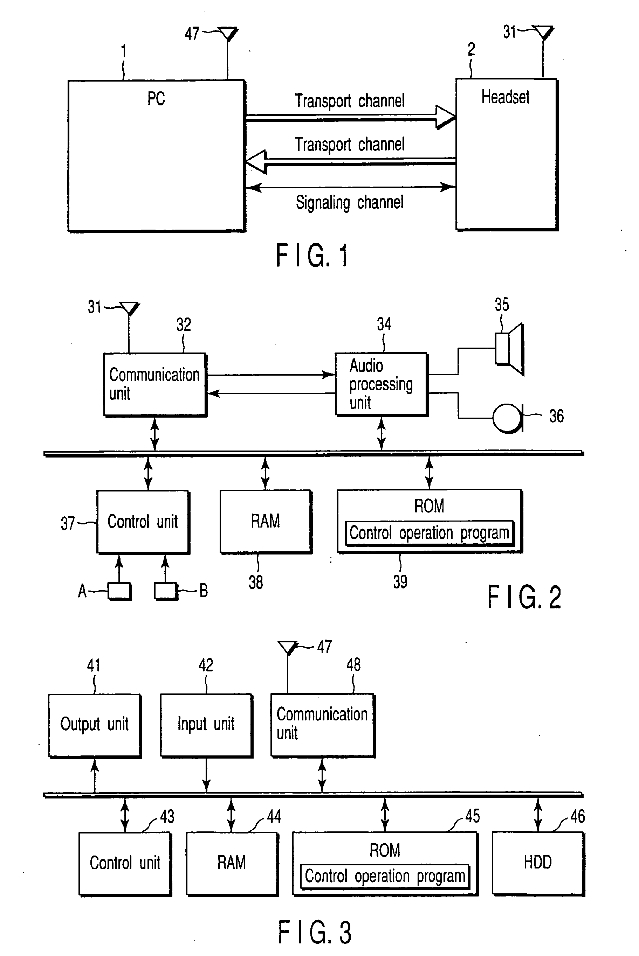

FIG. 1 is a view showing a wireless headset 2 and a personal computer (to be referred to as a PC hereinafter) 1 serving as a connection destination according to an embodiment of the present invention.

As shown in FIG. 1, data is transmitted/received by wirelessly connecting the PC 1 and wireless headset 2 by Bluetooth® communication units (to be described later) via an antenna 47 attached to the PC 1 and an antenna 31 attached to the wireless headset 2.

Audio data transmitted by streaming using a transport channel from the PC 1 in accordance with the Bluetooth AV profile can be acquired by the wireless headset 2 by receiving the audio data.

Audio data transmitted by streaming using a transport channel from the headset 2 can be acquired by the PC 1 by receiving the audio data. The transport channel is connected/disconnected by transmitting/receiving a command by using a signaling channel serving as a control channel.

FIG. 2 is a block diagram showing the circuit arrangement of the wireless headset.

The antenna 31 is connected to a Bluetooth communication unit 32, and the Bluetooth communication unit 32 communicates with another Bluetooth communication device.

The receiving side of an audio processing unit 34 decompresses compressed audio data from the Bluetooth communication unit 32, converts the audio data into an analog audio signal, and outputs the analog audio signal from a loudspeaker 35.

The transmitting side of the audio processing unit 34 A/D-converts an analog audio signal input from a microphone 36, compresses the resultant digital audio data, and outputs the compressed audio data to the Bluetooth communication unit 32.

The Bluetooth communication unit 32 and audio processing unit 34 are connected to a control unit 37, and the control unit 37 is connected to a RAM 38 and ROM 39.

The control unit 37 is comprised of a CPU and the like, and controls the entire headset on the basis of a predetermined program stored in the RAM 38. The ROM 39 stores a control operation program and the like for the control unit 37. The control unit 37 also comprises a function of recognizing digital audio data input from the audio processing unit 34.

The control unit 37 detects an event from a button A or B serving as a user interface of the wireless headset, and executes processing in accordance with the control operation program in response to the event.
The buttons A and B may be used to select a connection destination or used as another functional button.

The RAM 38 has a work area for temporarily storing various data to be processed under the control of the control unit 37, and an area for storing various pieces of information of the headset.

FIG. 3 is a block diagram showing the circuit arrangement of the personal computer (PC) having a Bluetooth communication function. This circuit arrangement is constituted by giving a general PC a Bluetooth communication function. The PC may incorporate the Bluetooth communication function, or a Bluetooth communication device may be externally attached by PC card connection or USB connection.

An output unit 41 is a display such as an LCD, and displays information to the user. An input unit 42 is a device such as a keyboard or mouse which transmits a user input. A control unit 43 controls the overall PC. A RAM 44 is used as a work area for temporarily storing various data to be processed under the control of the control unit 43. A ROM 45 stores a BIOS and the like. An HDD 46 is used to save and read out various programs and data which run in the PC. An antenna 47 is connected to a Bluetooth communication unit 48, and the Bluetooth communication unit 48 communicates with another Bluetooth communication device.

The operation of the wireless headset according to embodiments of the present invention will be explained.

### <First Embodiment>

In the first embodiment of the present invention, BD_ADDR (Bluetooth address) and RemoteName which are found by an inquiry are reproduced using speech synthesis together with a number representing the finding order. A specific key is pressed by the count of the number, thereby connecting a wireless headset 2 to the PC 1.

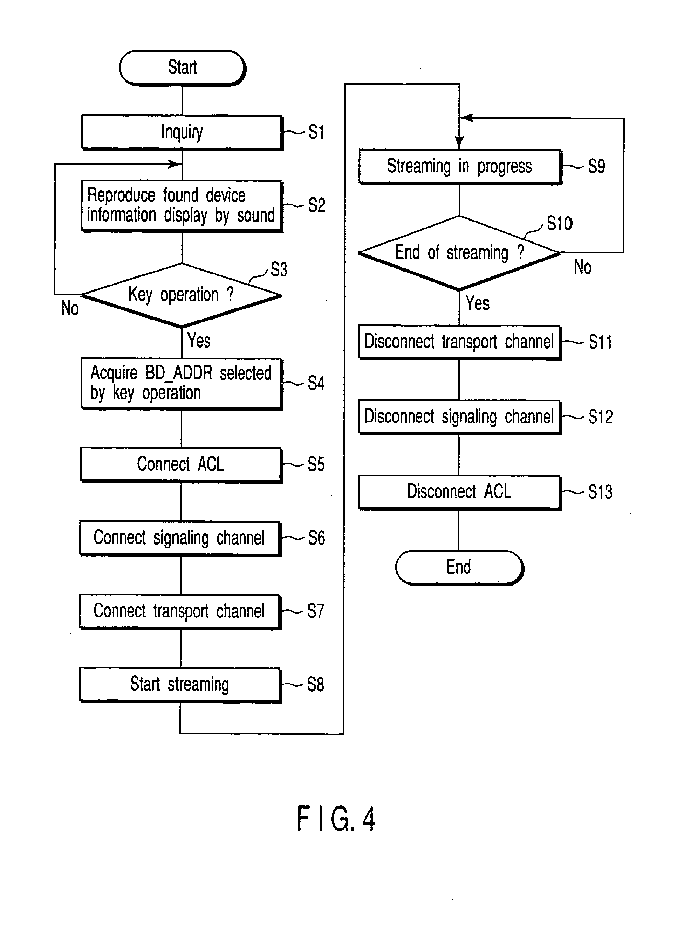

FIG. 4 is a flow chart showing processing on the wireless headset side when the wireless headset is connected to the PC according to the first embodiment of the present invention. This processing is mainly executed by a control unit 37 on the basis of a control operation program stored in a ROM 39.

The wireless headset 2 makes an inquiry in order to find the PC 1 serving as a connection destination, and searches for information on a device capable of Bluetooth wireless connection near the wireless headset 2 (S1).

The wireless headset 2 converts device information found in S1 into sound via an audio processing unit 34, and reproduces the sound from a loudspeaker 35 (S2). More specifically, audio data corresponding to 0 to 9 and A to F which are stored in the ROM 39 in advance and used to represent BD_ADDR are combined and reproduced such that, when BD_ADDR of the first found device is "00:50:CD:13:A4:AF", "1, 00, 50, CD, 13, A4, AF" are reproduced, and when BD_ADDR of the second found device is "00:06:EF:89:34:21", "2, 00, 06, EF, 89, 34, 21" are reproduced.

The wireless headset 2 determines whether a user key input has been received (S3). If N in S3, the wireless headset 2 repeats processing in S2; if Y, monitors the key input. For example, if the key A is pressed twice and then the key B is pressed, the wireless headset 2 determines that the second reproduced BD_ADDR has been selected, acquires the second BD_ADDR (S4), and connects a device having this BD_ADDR by a wireless link (S5).

If the wireless link is established, the wireless headset 2 establishes a signaling link (S6). The wireless headset 2 transmits/receives data necessary to connect a transport channel by using the signaling channel established in S6, and then establishes the transport channel (S7).

After the transport channel is established, streaming from the PC 1 starts (S8). Audio data from the PC 1 is transmitted to the wireless headset 2 via the transport channel so as to allow the user to listen to sound via the wireless headset 2 (S9). Streaming continues until the user executes procedures for ending streaming in the wireless headset 2 (S10).

If streaming ends, the wireless headset 2 disconnects the transport channel (S11), disconnects the signaling channel (S13), and disconnects the wireless link (S13), ending a series of operations.

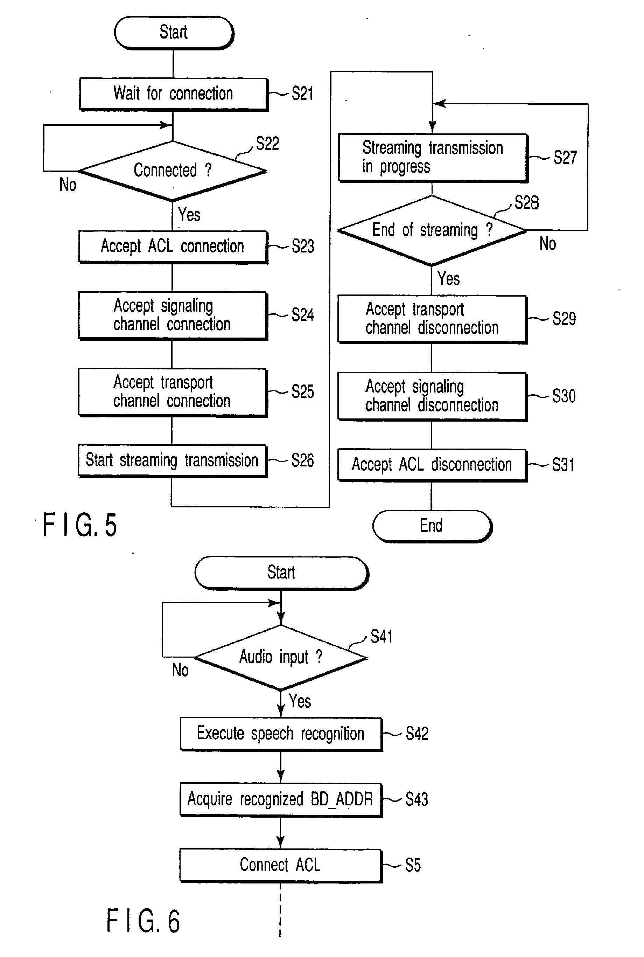

FIG. 5 is a flow chart showing processing contents in the PC 1 when the wireless headset 2 is connected to the PC 1. This processing is mainly executed by a control unit 43 on the basis of a control operation program stored in a ROM 45.

The PC 1 waits for connection from a partner device to be connected (S21). If no connection from the partner occurs, the PC 1 keeps waiting for connection. If connection from the partner occurs (Y in S22), the PC 1 establishes a wireless link by sending back a connection accept response in order to receive a Bluetooth wireless link connection request (S23).

The PC 1 establishes a signaling channel by sending back the connection accept response in order to receive a request for establishing a signaling channel defined by the Bluetooth AV profile by using a logical link complying with the L2CAP protocol (S24).

The PC 1 establishes a transport channel by sending back a connection accept response in order to receive a transport channel connection request (S25). Transmission of audio data starts by streaming from the PC 1 via the transport channel (S26), and the PC 1 keeps transmitting audio data by streaming until streaming ends (S27).

If streaming ends by procedures for ending streaming in the headset 2 (S28), the PC 1 receives a transport channel disconnection request, and sends back a response to it (S29). The PC 1 receives a signaling channel disconnection request, and sends back a response to it (S30). The PC 1 receives a wireless link disconnection request, and sends back a response to it (S31), thus ending a series of operations.

By these procedures, the headset 2 can be connected to the PC 1 serving as a specific connection destination.

With only the two buttons A and B, the wireless headset according to the first embodiment of the present invention can select and connect the PC 1 serving as a specific connection destination.

Information upon connecting the PC 1 may be saved in a RAM 38, and in connecting the PC 1 again, the information saved in the RAM 38 may be used.

In the first embodiment, a connection destination is selected using two keys of the wireless headset. However, the selection method is not limited to this, and identification information and information representing a wireless connection destination suffice to be specified using the user interface of the wireless headset.

### <Second Embodiment>

In the first embodiment, the number of a finding order and corresponding BD_ADDR are reproduced by sound, and the user is caused to select the number by a key input.

In the second embodiment, when BD_ADDR of a partner device to be connected is known in advance, the user inputs by voice "00, 50, CD, 13, A4, AF" as the BD_ADDR of the connection destination. An audio processing unit 34 recognizes the voice as a value "00:50:CD:13:A4:AF" by using speech recognition. Processes in S5 and subsequent steps are performed for the recognized BD_ADDR.

FIG. 6 is a flow chart for explaining the operation of a wireless headset according to the second embodiment of the present invention.

As shown in FIG. 6, the wireless headset determines whether an audio input has been received (S41). If Y in S41, the wireless headset executes recognition of the audio input (S42).

The audio input is done when the user speaks BD_ADDR by voice, as described above. The wireless headset acquires BD_ADDR recognized by speech recognition (S43), and performs processes in S5 and subsequent steps shown in FIG. 4.

The wireless headset according to the second embodiment of the present invention can be connected to an information processing apparatus when the user directly inputs, by voice, information representing a device to be connected.

Information upon connecting the PC 1 may be saved in a RAM 38, and in connecting the PC 1 again, the information saved in the RAM 38 may be used.

### <Third Embodiment>

A wireless headset according to the third embodiment of the present invention will be described.

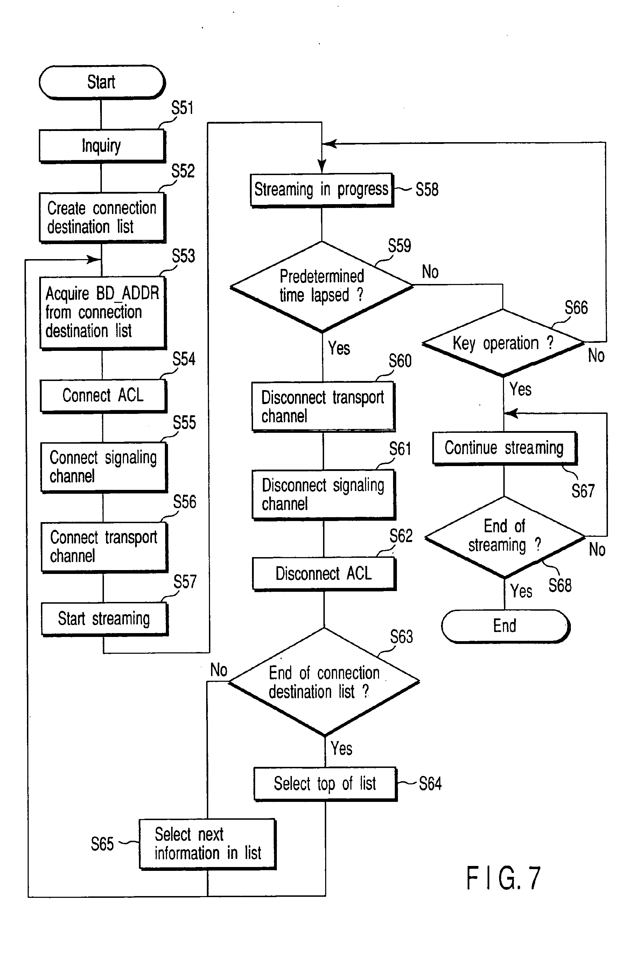

FIG. 7 is a flow chart showing processing on the wireless headset side when the wireless headset is connected to a PC. This processing is mainly executed by a control unit 37 on the basis of a control operation program stored in a ROM 39.

A wireless headset 2 makes an inquiry in order to find a connectable Bluetooth device near the wireless headset 2, and searches for information on a device capable of Bluetooth wireless connection near the wireless headset 2 (S51).

The wireless headset 2 creates an information list of connectable devices found in S51 (S52). In this list, BD_ADDRs are sequentially aligned. The wireless headset 2 acquires given BD_ADDR from the list created in S52 (S53), and connects a device having the BD_ADDR acquired in S53 by a wireless link (S54). If the wireless link is established, the wireless headset 2 establishes a signaling link (S55).

The wireless headset 2 transmits/receives data necessary to connect a transport channel by using the signaling channel established in S55, and then establishes the transport channel (S56).

After the transport channel is established, streaming from a PC 1 starts. Audio data from the PC 1 is transmitted to the wireless headset 2 via the transport channel so as to allow the user to listen to sound via the wireless headset 2 (S57 and S58).

The wireless headset 2 determines whether a predetermined time has been elapsed after the start of streaming (S59). If Y in S59, the wireless headset 2 disconnects the transport channel (S60), disconnects the signaling channel (S61), and disconnects the wireless link (S62).

The wireless headset 2 determines whether the device information is the final one in the connection destination list (S63). If Y in S63, the wireless headset 2 changes the information so as to select the top one in the list (S64); if N, changes the information so as to select the next one in the list (S65), and shifts to processing in S53 again.

If N in S59, the wireless headset 2 determines whether the user has operated a key (S66), and if N in S66, continues streaming in S58.

If Y in S66, the wireless headset 2 determines that the user has selected to keep listening to the current streaming, and continues streaming (S67). Streaming continues in S67 until the wireless headset 2 determines that the user has ended streaming (S68).

With these procedures, even the headset 2 which does not have a user interface for selecting a connection destination can select and connect the PC 1 serving as a specific connection destination.

Next connection is done upon the lapse of a predetermined time. Alternatively, when a key other than one used to determine key operation in S66 is pressed, processing may shift to S60 to perform next connection.

Similar to the first embodiment, information upon connecting the PC 1 may be saved in a RAM 38, and in connecting the PC 1 again, the information saved in the RAM 38 may be used.

The wireless headset according to the embodiments of the present invention can specify an arbitrary device from a plurality of connection destinations by outputting audio signals from devices to be sequentially connected every predetermined time and specifying as a connection target a device which has transmitted an audio signal output upon a predetermined key input.

The present invention is not limited to the above-described embodiments, and can be variously modified without departing from the spirit and scope of the invention in practical use. The respective embodiments can be arbitrarily combined as long as such combination is possible. In this case, the effects of the combination can be obtained. The embodiments include inventions on various stages, and various inventions can be extracted by an appropriate combination of building components disclosed. For example, when an invention is extracted by omitting several building components from all those described in the embodiments, the omission is properly compensated for by a well-known technique in practicing the extracted invention.

## Claims

1. A wireless sound apparatus **characterized by** comprising:
a unit (S2, S3) which determines one of a plurality of wireless communication apparatuses; and
a unit (S9) which outputs audio information transmitted from the selected wireless communication apparatus.

2. An apparatus according to claim 1, **characterized in that** said determining unit comprises
a unit which outputs information representing the plurality of wireless communication apparatuses together with predetermined identification information by sound, and
a unit which determines said one wireless communication apparatus by selecting the predetermined identification information.

3. An apparatus according to claim 2, **characterized in that** said unit which determines said one wireless communication apparatus comprises
a unit which outputs sequentially outputting pieces of audio information transmitted from the plurality of wireless communication apparatuses every predetermined time,
a unit which detects generation of a predetermined event, and
a unit which determines, as said one wireless communication apparatus, a wireless communication apparatus which has transmitted audio information output upon detecting the predetermined event.

4. An apparatus according to claim 1, **characterized in that** the wireless sound apparatus includes a wireless headset.
